(19) Europäisches Patentamt
European Patent Office
Office européen des brevets

(11) **EP 2 867 267 B1**

(12) **EUROPÄISCHE PATENTSCHRIFT**

(45) Veröffentlichungstag und Bekanntmachung des Hinweises auf die Patenterteilung:
**31.08.2016 Patentblatt 2016/35**

(21) Anmeldenummer: **13730891.2**

(22) Anmeldetag: **24.06.2013**

(51) Int Cl.:
*C08F 297/04* (2006.01)    *C08L 25/06* (2006.01)
*C08L 53/02* (2006.01)

(86) Internationale Anmeldenummer:
**PCT/EP2013/063096**

(87) Internationale Veröffentlichungsnummer:
**WO 2014/001233 (03.01.2014 Gazette 2014/01)**

(54) **VERFAHREN ZUR HERSTELLUNG VON UNSYMMETRISCH AUFGEBAUTEN, STERNFÖRMIG VERZWEIGTEN VINYLAROMAT-DIEN-BLOCKCOPOLYMEREN**

METHOD FOR PRODUCING ASYMMETRICALLY FORMED, STAR-BRANCHED VINYL AROMATIC-DIENE BLOCK COPOLYMERS

PROCÉDÉ DE FABRICATION DE COPOLYMÈRES SÉQUENCÉS DE COMPOSÉS VINYLAROMATIQUES ET DE DIÈNES À STRUCTURE ASYMÉTRIQUE ET À RAMIFICATION EN ÉTOILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.06.2012 EP 12174394**

(43) Veröffentlichungstag der Anmeldung:
**06.05.2015 Patentblatt 2015/19**

(73) Patentinhaber: **INEOS Styrolution Europe GmbH 60325 Frankfurt am Main (DE)**

(72) Erfinder:
• **KNOLL, Konrad**
  **68199 Mannheim (DE)**
• **DARDIN, Ulrike**
  **69514 Laudenbach (DE)**

(74) Vertreter: **Jacobi, Markus Alexander Isenbruck Bösl Hörschler LLP Eastsite One Seckenheimer Landstrasse 4 68163 Mannheim (DE)**

(56) Entgegenhaltungen:
EP-A1- 0 718 330    US-A- 4 091 053
US-A- 5 554 690    US-A1- 2003 232 928

Bemerkungen:
Die Akte enthält technische Angaben, die nach dem Eingang der Anmeldung eingereicht wurden und die nicht in dieser Patentschrift enthalten sind.

**Beschreibung**

Die Erfindung betrifft ein Verfahren zur Herstellung von unsymmetrisch aufgebauten, sternförmig verzweigten Vinylaromat-Dien-Blockcopolymeren, sowie die dadurch erhältlichen Polymere und deren Mischungen mit Thermoplasten, insbesondere mit Polystyrol. Die nach dem erfindungsgemäßen Verfahren hergestellten Produkte werden zur Herstellung von Formteilen und Tiefziehfolien verwendet.

Zur Herstellung von zäh-transparenten Artikeln, wie Folien, werden häufig sternförmige Styrol-Butadien-Blockcopolymere (SBS), oft in Mischung mit Standardpolystyrol (PS) eingesetzt. Die Herstellung erfolgt im Allgemeinen durch sequentielle anionische Polymerisation und anschließende Kopplung zu einem Produkt aus in Bezug auf die Sternäste statistisch zusammengesetzten sternförmigen S/B-Blockcopolymeren. Um eine gute Zäh-Effizienz bei gleichzeitig guter Zähigkeits-Steifigkeits-Relation zu erreichen, besitzen solche S/B-Sternpolymere einen Dien-Gehalt von bevorzugt 15-40 Gew.-%. Sternpolymere, die nur aus kurzen Ketten mit hohem Butadien-Gehalt bestehen, beeinträchtigen die Transparenz in Abmischung mit Standardpolystyrol, während hochmolekulare Blockpolymere mit sehr niedrigem Butadien-Gehalt sich spröde verhalten. Von daher ist man bestrebt, S/B-Sternpolymere herzustellen, die speziell in Mischungen mit PS sowohl eine hohe Zäheffizienz bei gleichzeitig guter Transparenz und Thermostabilität aufweisen und somit ein breites Einsatzspektrum dieser Polymerklasse gewährleisten

Im US-Patent 3,639,517 wird die Herstellung von sternförmigen SB-Blockcopolymeren durch zwei- oder mehrfache Initiierung von Styrol mit Lithiumalkylen in einem Reaktionsgefäß, anschließender Umsetzung mit Butadien und nachfolgender Kopplung des lebenden Polybutadien-Carbanions zu Sternpolymeren beschrieben. Das US-Patent 4091053 beschreibt eine verbesserte Ausgestaltung der vorgenannten zweifachen Initiierung, wobei das Verhältnis von Initiator 2 (I2) zu Initiator 1 (I1) variiert wird. Bei einem großen I2/I1-Verhältnis (ca. 8,5) resultieren Blockcopolymere mit einer hohen Reißdehnung (Vergleichsbeispiele), während die bei einem kleinen I2/I1-Verhältnis (ca. 1,5) gemäß der Beispiele hergestellten Blockcopolymere verbesserte Filmscharniereigenschaften und Steifigkeit bei verschlechterter Dehnung aufweisen.

EP-A 0 316 671 beschreibt unsymmetrisch aufgebaute, sternförmig verzweigte Blockcopolymere, die einen langen Styrol/Dien Block aus einem Pentablock mit zwei getrennten Polydien-Segmenten aufweisen.

Nach der ersten Initiierung und Umsetzung von Styrol wird ein kleiner Teil Dien oder ein Gemisch Dien/Styrol zugegeben. In einem weiteren Schritt werden im gleichen Reaktor zunächst ein weiterer größerer Teil Initiator, dann Styrol und nachfolgend weiteres Dien mit Styrol zugegeben. Nach der sequentiellen anionischen Polymerisation wird die gebildete Mischung von Blockcopolymer-Anionen zu Sternpolymeren gekoppelt. Die Produkte weisen erhöhte Fließfähigkeit und bessere Zähigkeit auf. Von Nachteil ist deren reduzierte Transparenz in Abmischung mit Polystyrol und das Auftreten von Gelteilchen, sogenannten Stippen, bedingt durch Vernetzungen.

Eine befriedigende Kombination aus hoher Zähigkeit, guter Transparenz, leichter Verarbeitung und ausgeprägter Verarbeitungsstabilität wird mit den nach dem Stand der Technik erhaltenen Produkten jedoch nicht erreicht.

Es bestand daher als eine Aufgabe, Vinylaromat/Dien-Blockcopolymere bereitzustellen, die sich bei üblichem Dien-Gehalt durch eine erhöhte Zäh-Effizienz bei gleichbleibender Transparenz, insbesondere in Abmischungen mit Standardpolystyrol, und Thermostabilität auszeichnen.

Diese Aufgabe wird gelöst durch die erfindungsgemäßen Vinylaromat-Dien-Blockcopolymere, die durch das erfindungsgemäße Verfahren erhältlich sind.

Gegenstand der Erfindung ist ein Verfahren zur Herstellung von unsymmetrisch aufgebauten, sternförmig verzweigten Blockcopolymeren, die, bezogen auf das gekoppelte Blockcopolymere, 60 bis 95 Gew.-% Vinylaromat und 40 bis 5 Gew.-% eines konjugierten Diens mit 4 bis 5 C-Atomen einpolymerisiert enthalten, durch sequentielle anionische Polymerisation und nachfolgende Kopplung der gebildeten lebenden Blockcopolymer-Anionen mit einem Kopplungsmittel, dadurch gekennzeichnet, dass

a1) in einem ersten Reaktor 30 bis 75 Gew.-% Vinylaromat, bezogen auf den Gesamtvinylaromatgehalt des gekoppelten Blockcopolymeren, in Gegenwart eines Initiators Ia auspolymerisiert wird, so dass Vinylaromatblock-Anionen Sa mit einer Molmasse Mw von 40000 bis 250000 g/mol resultieren;

a2) dann zu dem Vinylaromatblock-Anion Sa 5 bis 60 Gew.-% Dien, bezogen auf den Gesamtdiengehalt des verzweigten Blockcopolymeren, zugegeben und vollständig auspolymerisiert wird, so dass ein Blockcopolymer-Anion SaB1 mit einem Dienblock B1 resultiert;

b) separat in einem weiteren Reaktor 25 bis 70 Gew.-% Vinylaromat in Gegenwart eines Initiators Ib einfach oder mehrfach initiiert und auspolymerisiert wird, so dass ein oder mehrere Vinylaromatblockanionen Sb1 bis Sbn+1 mit einer Molmasse Mw von 5000 bis 50000 g/mol gebildet werden;

c) die in a2) und b) erhaltenen anionischen Blöcke SaB1 und Sb1 bis Sbn+1 in einem Reaktor vereinigt werden;

d) zu dieser Mischung die restliche Dienmenge, bezogen auf den Gesamtdiengehalt des verzweigten Blockcopolymeren, zugegeben und auspolymerisiert wird, so dass Blockcopolymer-Anionen SaB1B2 bzw. Sb1B2 bis Sbn+1 B2 enthaltend Dienblöcke B2 resultieren; und

e) die erhaltenen Blockcopolymer-Anionen mit einem di- oder polyfunktionellen Kopplungsmittel zu einem verzweigten Blockcopolymer gekoppelt werden.

Unter der Molmasse (Mw) ist die gewichtsmittlere Molmasse zu verstehen.

Der Dienblock B1 bzw. B2 wird auch als die Weichphase des verzweigten Blockcopolymeren bezeichnet.

Der Dienblock B1 kann einen oder mehrere Polyvinylaromatblöcke mit einer Molmasse Mw von jeweils maximal 8000 g/mol enthalten. Dazu wird in Schritt a2) des erfindungsgemäßen Verfahrens das Dien bevorzugt gemeinsam mit dem Vinylaromat zugegeben.

Die Dienblöcke B2 können auch Vinylaromat-Einheiten mit einer Molmasse Mw von jeweils maximal 8000 g/mol enthalten. Dazu wird in Schritt d) des erfindungsgemäßen Verfahrens das Dien bevorzugt gemeinsam mit Vinylaromat zugegeben.

Für den Einbau in die Weichphase, d.h. in den Dienblock B1 und die Dienblöcke B2, können insgesamt höchstens 30 Gew.-% der Gesamtvinylaromatmenge, bevorzugt bis zu 25 Gew.-%, eingesetzt werden.

Geeignete konjugierte Diene für das erfindungsgemäße Verfahren sind 1,3-Diene, bevorzugt 1,3-Butadien, Isopren, 2,3-Dimethylbutadien und/oder 1,3-Pentadien, besonders bevorzugt 1,3-Butadien.

Als Vinylaromaten für das erfindungsgemäße Verfahren eignen sich Styrol, $\alpha$-Methylstyrol, o-, m-, p-substituierte Alkylstyrole Vinylnaphthalin und/oder 1,1-Diphenyl-ethylen, bevorzugt Styrol, $\alpha$-Methylstyrol, o-, m-, p-substituierte Alkylstyrole wie o-, mund/oder p-Methylstyrol, besonders bevorzugt Styrol.

Bei dem erfindungsgemäßen Verfahren können ein oder auch mehrere verschiedene Vinylaromaten eingesetzt werden.

Besonders bevorzugt werden durch das erfindungsgemäße Verfahren Blockcopolymere hergestellt, die, bezogen auf das verzweigte Blockcopolymere, 60 bis 95 Gew.-% Styrol und 40 bis 5 Gew.-% 1,3-Butadien einpolymerisiert enthalten.

Die nach dem erfindungsgemäßen Verfahren hergestellten Blockcopolymere aus Vinylaromat und konjugiertem Dien weisen gegenüber solchen gemäß dem Stand der Technik eine optimierte Polydienverteilung auf und besitzen eine verbesserte Zäheffizienz besonders in Abmischung mit Standardpolystyrol unter besserem Erhalt der Transparenz.

Nachstehend wird das erfindungsgemäße Verfahren näher erläutert.

Die Herstellung von unsymmetrisch aufgebauten, sternförmig verzweigten Blockcopolymerisaten ist aus dem zuvor zitierten Stand der Technik hinreichend bekannt [vgl. insbesondere EP 0316671 A2]. Sternblockcopolymere, insbesondere auch unsymmetrische, sind generell dem Fachmann bekannt (vgl. Kunststoffhandbuch, Bd. 4 Polystyrol, Kap. 3.3.4.2, Hanser Verlag, 1996). Unter Sternblockcopolymeren sind erfindungsgemäß auch durch difunktionelle Kopplungsmittel aneinander gekoppelte Blockcopolymere des Kopplungsprodukts von SaB1 und Sb1 bis Sbn+1 zu verstehen.

Die sequentielle anionische Polymerisation ist an sich bekannt. Sie wird unter Verwendung von bevorzugt Monolithiumkohlenwasserstoffen R-Li als Initiator durchgeführt, wobei R einen aliphatischen, cycloaliphatischen oder aromatischen Kohlenwasserstoffrest mit 1 bis 12 C-Atomen darstellen kann. Bevorzugt werden n-Butyllithium und sec.-Butyllithium verwendet. Bei Verwendung von n-Butyllithium (n-BuLi) ist ein Aktivator erforderlich, bevorzugt ein Ether wie THF. Zur Aktivierung von n-BuLi werden bevorzugt 0,01 bis 0,1 Vol.-% THF, bezogen auf das Lösungsmittel, zugegeben.

Das erfindungsgemäße Verfahren wird vorzugsweise in einem unpolaren Lösungsmittel, vorzugsweise Cyclohexan, durchgeführt, das in die jeweiligen Gefäße vorgelegt wird. Die sequentielle anionische Polymerisation wird vorzugsweise bei einer Temperatur im Bereich von 20 bis 100°C durchgeführt.

Der Initiator wird in allgemein üblichen Mengen eingesetzt, die sich aus den angestrebten Molmassen ableiten.

Unter der Initiator-Menge ist die Gesamtinitiator-Menge entsprechend der Summe $\sum$ Ia bzw. $\sum$ Ib des gegebenenfalls auch mehrfach (n-fach) eingesetzten Initiators zu verstehen. Dabei ist n vorzugsweise eine ganze Zahl von 1 bis 3.

Das Initiierungsverhältnis bei gekoppelten S/B Blockcopolymeren beschreibt das molare Verhältnis von eingesetzter Initiatormenge $\sum$ Ia für den langen Vinylaromatblock Sa zu den eingesetzten Initiatormengen $\sum$ Ib, dh. $\sum$ Ib1 bis Ibn+1, für die Initiierung der kurzen Vinylaromatblöcke Sb1 bis Sbn. Das molare Verhältnis $\sum$ Ia zu $\sum$ Ib liegt bevorzugt in einem Bereich von 1:10 bis 1:1, besonders bevorzugt in einem Bereich von 1:7 bis 1:2. Kleinere molare Initiierungsverhältnisse wie z.B. 1:20 führen zu einer größeren Anzahl an Sternpolymeren mit ausschließlich kürzeren S-Blöcken, wodurch die Unverträglichkeit in Abmischungen mit Polystyrol zunimmt und sich in Folge die Transparenz der so hergestellten S/B-Blockcopolymer/PS-Mischungen verschlechtert.

Der nach Schritt a1) des erfindungsgemäßen Verfahrens erhaltene lange Polyvinylaromatblock Sa weist eine Molmasse Mw im Bereich von 40000 bis 250000 g/mol auf, bevorzugt zwischen 50000 g/mol und 200000 g/mol. Der dafür verwendete Anteil an Vinylaromat bezogen auf den Gesamtvinylaromatgehalt des verzweigten Blockcopolymeren liegt im Bereich von 30 bis 75 Gew.-%, bevorzugt im Bereich von 35 bis 72 Gew.-%. Die restliche Menge an Vinylaromat, d.h. 25 bis 70 Gew.-%, bevorzugt 38 bis 65 Gew.-%, kann unterschiedlich eingesetzt werden. Der Polyvinylaromatblock Sa kann auch eine breite Molmassenverteilung aufweisen oder bi- oder oligomodal sein. Eine breite Molmassenverteilung kann durch teilweise parallelen Zulauf von Initiator und Monomer erreicht werden, eine bi- oder oligomodale Verteilung durch eine zwei- oder mehrfache Initiator-Monomer-Sequenz, wobei nach jeder Monomerzugabe auspolymerisiert wird.

Erfindungsgemäß kann der Übergang von dem Hartsegment (Polyvinylaromatblock) S auf die Weichphase B sowohl ein scharfer als auch ein verschmierter Übergang sein. Ein scharfer Übergang wird dadurch hervorgerufen, dass die Monomermenge der Weichphase B erst nach vollständiger Reaktion des Vinylaromatmonomeren zur Reaktionsmischung gegeben wird. Ein verschmierter Übergang wird erreicht, indem die Monomermenge der Weichphase B bereits vor der vollständigen Umsetzung der Vinylaromatmonomeren zur Reaktionsmischung zugesetzt wird. Innerhalb eines gekoppelten S/B-Blockcopolymeren kann auch eine Kombination verschiedener Übergänge und Weichphasen vorliegen.

Für den Aufbau der Weichphase B stehen erfindungsgemäß Dienmengen von 5 bis 40 Gew.-% zur Verfügung. Diese werden zunächst anteilig in Schritt a2) des erfindungsgemäßen Verfahrens mit dem langen Vinylaromatblockanion Sa zu SaB1 umgesetzt.

Für die Umsetzung mit dem langen Vinylaromatblockanion Sa werden bis zu 50 Gew.-% des in dem gekoppelten S/B Blockcopolymeren enthaltenen Diens eingesetzt. Dabei werden für den B1-Block bevorzugt Molmassen Mw von 3000 bis 30000 g/mol erhalten.

Nach dem erfindungsgemäßen Verfahren erfolgt die Herstellung der kurzen Vinylaromatblöcke Sb1 bis Sbn+1 in Schritt b) räumlich getrennt in einem separaten Reaktor. Der Reaktor kann zum Beispiel ein Tank, ein Rohr, ein Wärmetauscher oder ein gerührter Reaktor sein. Bevorzugt ist der Reaktor mit einer Kühleinrichtung ausgestattet; sie kann in einem Kühlmedium bestehen, das die Außenwand des Reaktors benetzt, oder in Form eines Siedekühlers auf dem Reaktor, oder einem Kühlkreis mit einem Wärmetauscher.

Die Molmasse Mw der kurzen Vinylaromatblöcke Sb1 bis Sbn+1liegt bei mindestens 5000 g/mol, besonders im Bereich zwischen 10000 g/mol und 50000 g/mol. Die Vinylaromatblöcke Sb1 bis Sbn+1 können auch eine breite Molmassenverteilung aufweisen oder bi- oder oligomodal sein. Bevorzugt werden die Blöcke Sb1 bis Sbn+1 ein bis viermal initiiert. Bei breiten Molmassenverteilungen beträgt die gewichtsmittlere Molmasse $M_w$ der einzelnen Vinylaromatblöcke Sb1 bis Sbn+1 maximal 50000 g/mol.

Gemäß Schritt c) des erfindungsgemäßen Verfahrens werden die Reaktionslösung enthaltend das lebende Blockcopolymer-Anion SaB1 und die Reaktionslösung enthaltend die kurzen lebenden Vinylaromatblockanionen Sb1 bis Sbn+1 in einem Reaktor zusammengeführt. Dies kann der Reaktor sein, in dem zuvor Sa hergestellt wurde, oder derjenige, in dem Sb hergestellt wurde, oder aber ein dritter Reaktor. Wie oben beschrieben können die Reaktoren in unterschiedlichen Bauformen ausgeführt sein und sind bevorzugt mit einer Kühleinrichtung ausgestattet. Zu dieser vereinigten Reaktionslösung enthaltend SaB1 und Sb1 bis Sbn+1 wird in Schritt d) des erfindungsgemäßen Verfahrens die restliche Dienmenge B2 gegeben und auspolymerisiert. Dabei werden bevorzugt Molmassen Mw der einzelnen B2-Blöcke von 3000 bis 30000 g/mol erhalten.

Gemäß einer weiteren Ausführungsform des erfindungsgemäßen Verfahrens ist es auch möglich, beispielsweise nur Sb1 zu SaB1 zu geben, dieses mit dem Dien B2 zu SaB1 B2 und Sb1 B2 umzusetzen, gleichzeitig in einem weiteren Reaktor Vinylaromatblockanionen Sb2 bis Sbn+1 zu polymerisieren, dann Sb2 bis Sbn+1 gleichzeitig oder sukzessive zu der Mischung von SaB1B2 und den bereits mit B2 umgesetzten Vinylaromatblockanionen Sb zu geben, und dann die erhaltene Mischung mit der verbliebenen Menge an Dien B2 weiter umzusetzen. Dieser beschriebene stufenweise Aufbau kann mehrmals bis zur letztendlichen Zugabe von Sbn+1 erfolgen.

Die Weichphase B, d.h. Dienblöcke B1 und/oder B2, der nach dem erfindungsgemäßen Verfahren hergestellten verzweigten Blockcopolymeren können als Dienhomopolymer-Segmente, statistische S/B-Copolymere oder Gradientenpolymere (tapered blocks), oder als Kombination der genannten Möglichkeiten vorliegen.

Nach dem erfindungsgemäßen Verfahren kann der Aufbau der Weichphase B durch alleinige Dosierung von Dien unter Bildung eines Dienhomopolymerblocks oder durch gemeinsame Dosierung von Dien und Vinylaromat erfolgen. Dabei erfolgt ein Einbau von Vinylaromat-Monomer in den Dienhomopolymerblock. Dieser kann zu getaperten Blöcken (Gradientenpolymeren) führen, wobei zu Beginn der Polymerisation ein fast ausschließlicher Einbau von Dien und erst nach fast vollständiger Umsetzung des Diens die Umsetzung bzw. der Einbau des Vinylaromaten erfolgt.

Durch Zugabe polarer Verbindungen sogenannten Randomizern, wie Ether oder Kaliumsalze, besonders THF oder Kaliumtertiäramylat (KTA), können auch statistische Blöcke erhalten werden. Zur Erhöhung der "Randomisierung" ist es vorteilhaft, wenn die gemeinsame Zugabe der beiden Monomeren in mehreren Schritten, d.h. durch mehrmalige, vorzugsweise 2 bis 6 malige Dosierung der Monomerenmischung, erfolgt. Bei der Wahl der "Randomizer" sind solche bevorzugt, die einen 1,2-Vinylgehalt des Diens von unter 20% ergeben, um eine gute Thermostabilität der Weichphase zu erzielen. Das Molverhältnis von Initiator zu Kaliumsalz-Randomizern beträgt bevorzugt 37:1, um eine statistische Copolymerisation zu bewirken. Bei Verwendung von THF als Randomizer werden bevorzugt 0,25 bis 0,4 Vol-% in Bezug auf das Lösungsmittel eingesetzt.

Nach dem erfindungsgemäßen Verfahren können für den Einbau in die Weichphase B, d.h. in den Dienblock B1 und die Dienblöcke B2, insgesamt höchstens 30 Gew.-% der Gesamtvinylaromatmenge, bevorzugt bis zu 25 Gew.-% eingesetzt werden.

Nach dem erfindungsgemäßen Verfahren können auf die vorgenannte Weise in das Weichsegment B1 und/oder die Weichsegmente B2 ein oder mehrere Vinylaromatblöcke eingebaut werden, wobei die einzelnen Vinylaromatblöcke eine Molmasse $M_w$ von maximal 8000 g/mol aufweisen dürfen und die Weichphase B wie zuvor beschrieben ausgebildet sein kann.

In einem optionalen Schritt des erfindungsgemäßen Verfahrens kann vor der Kopplung in Schritt e) ein kurzer Vinylaromatblock S auf die vereinigten, mit der Weichphase B2 versehenen, langen und kurzen Äste, d.h. Blockcopolymer-Anionen SaB1B2 bzw. Sb1 B2 bis Sbn+1 B2, polymerisiert werden. Hierfür werden 1 bis 10 Gew.-% der Gesamtvinylaromatmenge des gekoppelten Blockcopolymers eingesetzt. Die Zugabe des Vinylaromaten kann entweder nach abgeschlossener Reaktion der Weichphase B2, gemeinsam mit dem Dien der Weichphase B2 oder während der Polymerisation der Weichphase B2 erfolgen. Dieser kurze Vinylaromatblock S weist in den vorgenannten Blockcopolymer-Anionen üblicherweise eine Molmasse $M_w$ von 1000 bis 10000 g/mol auf.

Die vorgenannten Ausführungsformen sind auch kombinierbar.

Bei dem letzten Schritt e) des erfindungsgemäßen Verfahrens erfolgt die Kopplung der lebenden linearen S/B-Blockcopolymer-Anionen durch Zugabe eines di-, oligo- oder polyfunktionalen Kopplungsmittels zu der Reaktionslösung. Die Funktionalität des Kopplungsmittels liegt dabei bevorzugt im Bereich von 2 bis 6. Übliche Kopplungsmittel sind bekannte Polyepoxide, epoxidierte Pflanzenöle, Divinylbenzol, Oligoisocyanate, Di- und Oligocarbonsäureester oder Siliciumpolyhalogenide. Als bevorzugte Kopplungsmittel werden epoxidierte Pflanzenöle wie epoxidiertes Leinsamenöl oder epoxidiertes Sojabohnenöl, besonders bevorzugt epoxidiertes Sojabohnenöl, verwendet. Ebenfalls bevorzugt sind Ester wie Ethylacetat, Diethyladipat, Diethylcarbonat, Ethylencarbonat oder Propylencarbonat.

Bei dem erfindungsgemäßen Verfahren wird die Funktionalität des Kopplungsmittels bevorzugt entsprechend der Formel "x-mal molares Verhältnis $\sum$ la zu $\sum$ Ib" ausgewählt, wobei x im Allgemeinen für eine Zahl von 0,3 bis 4, bevorzugt für eine Zahl von 0,5 bis 2, ganz besonders bevorzugt für eine Zahl von 0,7 bis 1,5 steht und $\sum$ la und $\sum$ Ib wie zuvor beschrieben definiert sind.

Durch den Einsatz eines Kopplungsmittels mit einer der Formel entsprechenden Funktionalität wird erreicht, dass nach der Kopplung statistisch viele Sternpolymere mit zumindest einem langen Ast SaB1 B2 entstehen, wodurch die Kompatibilität mit Polystyrol in der Mischung gewährleistet ist.

Vor der Isolierung der nach dem Kopplungsschritt e) erhaltenen verzweigten Blockcopolymerisate kann ggf. eine Behandlung mit Protonendonatoren erfolgen, z.B. mit Wasser, Alkoholen, Carbonsäuren und dergleichen. Besonders bevorzugt ist die Behandlung mit einer Mischung aus Wasser und Kohlendioxid, so dass das Lithium vorwiegend oder vollständig als Lithiumhydrogencabonat vorliegt.

Ferner können vor der Isolierung Oxidatonsstabilisatoren, Fließverbesserer wie Weißöl, Entformungshilfsmittel wie Erucasäureamid, Stearinsäureamide und andere Hilfsstoffe hinzugefügt werden. Die Isolierung der Wertprodukte aus der Lösung erfolgt in üblicher Weise, z.B. unter Entfernen des Lösungsmittels durch Eindampfen oder durch Ausfällen, Abfiltrieren und Trocknen des Polymerisats. Bevorzugt ist eine zweistufige Verdampfung, bei der die verdünnte Polymerlösung zunächst auf 180-230°C aufgeheizt und in einem Entgasungstopf entspannt wird, so dass eine 75-95%ige Lösung entsteht, die in einem weiteren Apparat, bevorzugt einem Extruder von Restlösungsmittel befreit und granuliert wird. Statt einem Entgasungstopf kann auch ein Fallfilmverdampfer zur Voranreicherung verwendet werden.

Ganz wesentlich für das erfindungsgemäße Verfahren und die dadurch erhältlichen erfindungsgemäßen sternförmigen Blockcopolymere, die sich durch einen gezielt einstellbaren Diengehalt in dem langen S/B Block und den kurzen S/B-Blöcken auszeichnen, ist, dass der lange Sa-B1 Block und die kurzen Sb1 bis Sbn+1-Blöcke räumlich getrennt in separaten Gefäßen wie gerührten oder ungerührten Reaktoren, Tanks, Rohren oder Rohrbündeln, Platten- oder Rohrbündelwärmetauschern, oder umgepumpten Tanks bevorzugt in Kombination mit Wärmetauschern hergestellt werden.

Das erfindungsgemäße Verfahren kann in einer diskontinuierlichen und/oder einer kontinuierlichen Fahrweise mit mindestens zwei oder mehreren Reaktoren betrieben werden. Bei diskontinuierlicher Fahrweise ist die Verwendung von zwei Reaktoren bevorzugt, deren Größe an die Monomermengen angepasst ist. Falls das Verfahren kontinuierlich betrieben wird, werden die Reaktoren so miteinander verbunden, dass nach Herstellung der kurzen Vinylaromatblockanionen Sb1 bis Sbn+1 die diese enthaltende Reaktionslösung zur geeigneten Zeit mit der Reaktionslösung enthaltend SaB1 vereinigt werden kann. Gemäß einer weiteren Ausführungsform des erfindungsgemäßen Verfahrens kann die kontinuierliche und diskontinuierliche Fahrweise miteinander kombiniert werden.

Durch das erfindungsgemäße Verfahren kann die Verteilung des Diens innerhalb des erfindungsgemäß sternförmigen Polymeren gezielt variiert werden. Durch Anpassung des Dienblockes B1 sind durch das erfindungsgemäße Verfahren Sternpolymere erhältlich, in denen alle Äste der Blockcopolymeren, d.h. sowohl der lange Ast SaB1 B2 als auch die kurzen Äste Sb1 B2 bis Sbn+1 B2, den gleichen Gewichtsanteil an Dien besitzen.

Ebenfalls erfindungsgemäß herstellbar sind Sternpolymere, bei denen der lange Ast SaB1 B2 einen deutlich höheren oder einen deutlich niedrigeren Gewichtsanteil an Dien als die kurzen Äste Sb1 B2 bis Sbn+1 B2 besitzen.

Weiterer Gegenstand der Erfindung sind die durch das erfindungsgemäße Verfahren erhältlichen unsymmetrisch aufgebauten, sternförmig verzweigten Vinylaromat-Dien-Blockcopolymere. Bevorzugte Vinylaromat-Dien-Blockcopolymere sind beispielsweise Styrol-Butadien-Blockcopolymere der folgenden Strukturen:

$$St1\text{-}Bu1\text{-}Bu2\text{-}x + St2\text{-}Bu2\text{-}x$$

$$St1\text{-}Bu1\text{-}Bu2 \rightarrow St3\text{-}x + St2\text{-}Bu2 \rightarrow St3\text{-}x$$

$$St1\text{-}Bu1\text{-}Bu2\text{-}x + St2\text{-}St3\text{-}Bu2\text{-}x + St3\text{-}Bu2\text{-}x$$

$$St1\text{-}Bu1\text{-}Bu2 \rightarrow St4\text{-}x + St2\text{-}St3\text{-}Bu2 \rightarrow St4\text{-}x + St3\text{-}Bu2 \rightarrow St4\text{-}x$$

$$St1\text{-}Bu1\text{-}Bu2\text{-}Bu3\text{-}x + St2\text{-}Bu2\text{-}Bu3\text{-}x + St3\text{-}Bu3\text{-}x$$

$$St1\text{-}St2\text{-}Bu1\text{-}Bu2 \text{-}x + St2\text{-}Bu1\text{-}Bu2\text{-}x + St3\text{-}Bu2\text{-}x$$

$$St1\text{-}St2\text{-}Bu1\text{-}Bu2 \rightarrow St4 \text{-}x + St2\text{-}Bu1\text{-}Bu2 \rightarrow St4\text{-}x + St3\text{-}Bu2 \rightarrow St4\text{-}x$$

$$St1\text{-}(St/Bu)1\text{-}(St/Bu)2\text{-}x + St2\text{-}(St/Bu)2\text{-}x$$

$$St1\text{-}(St/Bu)1\text{-}(St/Bu)2\text{-}x + St2\text{-}St3\text{-}(St/Bu)2\text{-}x + St3\text{-}(St/Bu)2\text{-}x$$

$$St1\text{-}Bu1\text{-}Bu2\text{-}Bu3 \rightarrow S4\text{-}x + St2\text{-}Bu2\text{-}Bu3 \rightarrow S4\text{-}x + St3\text{-}Bu3 \rightarrow S4\text{-}x$$

In diesen Strukturen symbolisiert der Pfeil einen "verschmierten Übergang" von Butadien nach Styrol, der Schrägstrich eine statistische Copolymerisation mit gleichmäßigem Monomer-Einbau. Die unterschiedlichen Sternäste sind durch ein Pluszeichen getrennt; x symbolisiert die Anbindung an das Kopplungsmittel.

Die nach dem erfindungsgemäßen Verfahren hergestellten Blockcopolymere enthalten in der Gesamtzusammensetzung 60 bis 95 Gew.-%, bevorzugt 70 bis 85 Gew.-%, besonders bevorzugt 72 bis 78 Gew.-% Vinylaromat und 5 bis 40 Gew.-%, bevorzugt 15 bis 30 Gew.-%, besonders bevorzugt 22 bis 28 Gew.-% mindestens eines konjugierten Diens mit 4 oder 5 C-Atomen, wie Butadien oder Isopren, wobei Butadien bevorzugt wird.

Die nach dem erfindungsgemäßen Verfahren erhältlichen Produkte können unter Zusatz üblicher Hilfsmittel, wie Stabilisatoren, Gleitmittel, Antiblockmittel, Flammschutzmittel und ggf. auch Füllstoffe, zur Herstellung von Formteilen (oder Folien) erfindungsgemäß verwendet werden. Die Verarbeitung erfolgt dabei in an sich bekannter Weise nach den üblichen Verfahren, z.B. durch Extrudieren, Tiefziehen oder Spritzgießen. Erfindungsgemäß eignen sich die Produkte insbesondere zur Herstellung von Formkörpern und Folien, insbesondere Tiefziehfolien, zur Verpackung.

Die nach dem erfindungsgemäßen Verfahren erhältlichen Blockcopolymerisate lassen sich mit Thermoplasten wie Polystyrol, schlagfestem Polystyrol, oder Polyphenylenoxyd in beliebigen Verhältnissen abmischen. Ein weiterer Gegenstand der Erfindung sind thermoplastische Mischungen enthaltend die nach dem erfindungsgemäßen Verfahren erhältlichen Blockcopolymerisate. Bevorzugt sind thermoplastische Mischungen von nach dem erfindungsgemäßen Verfahren erhältlichen Styrol-Butadien-Blockcopolymerisaten und einem Thermoplast wie Polystyrol.

Die durch das erfindungsgemäße Verfahren erhältlichen Produkte zeichnen sich besonders in Mischung mit Standardpolystyrol durch eine verbesserte Zäheffizienz unter Erhalt der Transparenz aus.

Die Erfindung wird durch die nachfolgenden Beispiele und Ansprüche näher erläutert.

Beispiele

Verwendete Chemikalien: Styrol (Hersteller: BASF SE) Sec-Butyllithium (12 Gew.-%) in Cyclohexan/n-Hexan Gemisch (der Firma Chemetall) Butadien (der BASF SE)

Das Styrol entstammt der Styrol-Destillation der Styrolfabrik (der Anmelderin) und konnte ohne weitere Reinigung eingesetzt werden, das Cyclohexan wurde bei Zimmertemperatur über eine Aluminiumoxid-Säule getrocknet und das Butadien wurde bei - 10°C über Aluminiumoxid getrocknet und vom Stabilisator befreit.

Die GPC-Messungen erfolgten gemäß der Norm DIN 55672 in THF unter Verwendung eines Brechungsindexdetektors (ERC-RI-101). Die Eichung erfolgte mit Polystyrol-Standards der Firma Polymer Laboratories. Hierbei ist zu beachten, dass die Molmasse der Butadieneinheiten um einen Faktor von ca. 1,72 überschätzt wird. Mn ist die zahlenmittlere Molmasse, Mw die gewichtsmittlere Molmasse und Mp die Molmasse am Peakmaximum. Wird eine polymodale Molmassenverteilung, also mehrere Peakmaxima, beobachtet, werden alle Mp-Werte angegeben. Die Angaben für Mn und Mw beziehen sich immer auf die gesamte Breite der Molmassenverteilung.

Für jedes Beispiel bzw. Vergleichsbeispiel wurde ein doppelwandiger, simultan heiz- und kühlbarer 10 Liter-Edelstahlautoklav, der mit einem Kreuzbalkenrührer ausgerüstet war, durch Spülen mit Stickstoff und Auskochen mit Cyclohexan/sec.-BuLi vorbereitet. Dann wurde Cyclohexan eingefüllt und die in den jeweiligen Beispielen angegebenen Mengen an Initiator und Monomeren und gegebenenfalls weiterem Lösungsmittel zugesetzt. Die Temperatur des Reaktionsgemisches wurde durch Heizung oder Kühlung des Reaktormantels gesteuert. Die weitere Aufarbeitung erfolgt nach den üblichen Verfahren. Nach Umsetzungsende wurde Isopropanol zur Protonierung der Carbanionen zugesetzt.

Die Glasübergangstemperaturen wurden mittels DSC (differential scanning calorimetry, ISO 11357-2) bestimmt.

Vergleichsbeispiel

4786 ml (3733 g) Cyclohexan wurden mit 1,29 ml THF und 672 ml (609,1 g) Styrol im Reaktor vorgelegt und mit 1,4 molarer sec.-BuLi-Lösung bis zum Auftreten einer leichten Gelbfärbung austitriert. Sofort danach wurde mit 4,31 ml dergleichen BuLi-Lösung initiiert, wobei sich die Lösung intensiv gelb-orange verfärbte. Die Innentemperatur wurde durch Außenkühlung bei ca. 70-80°C gehalten. Nach Abklingen der Wärmetönung wurde eine Probe zur GPC-Messung entnommen, die sofort mit Isopropanol desaktiviert wurde (Mp 95639 g/mol). Danach wurden 5,09 ml BuLi gefolgt von 315 ml ( 285,3 g) Styrol zugegeben und wiederum bis zum Abklingen der Wärmetönung polymerisiert (Probe: Mp 119990 und 22460 g/mol). Erneut wurden 15,12 ml BuLi und 286 ml (259,0 g) Styrol dosiert und nach Abklingen der Wärmetönung eine Probe genommen (Mp 129120, 30488 und 7228 g/mol). Anschließend wurden gleichzeitig 611 ml (400 g) Butadien und 51 ml (46,6 g) Styrol zugegeben. Nach Abklingen der Wärmetönung und Probenahme (Mp 156177, 57196 und 31589 g/mol; Mn 58302 g/mol, Mw 99045) wurde durch Zugabe von 2,15 ml epoxidiertem Sojabohnenöl bei 80°C gekoppelt. Die Farbe veränderte sich hierbei von orange nach blassgelb. Nach weiteren 15 Minuten wurde 2,5 ml Isopropanol hinzugefügt, die Lösung auf 30°C abgekühlt, in einen Kanister abgelassen, dort mit 8 ml Wasser und 16 g Trockeneis versetzt und kräftig geschüttelt, um die Lösung sauer zu stellen (multimodale Molmassenverteilung, Mn 96243 g/mol, Mw 170180). Anschließend wurde durch Zusatz von 3,2 g Sumilizer GS und 3,2 g Irganox 1010, die in Toluol gelöst waren, stabilisiert. Das Cyclohexan wurde anschließend in einem EX-Vakuumtrockenschrank entfernt. Es wurden 1,6 kg eines klaren, farblosen Harzes erhalten. Die Glasübergangstemperaturen lagen bei -80 und 99°C. Die Schmelzeviskosität wurde als MVR (melt viscosity rate) bei 200°C bestimmt und lag bei 7,7 ml/10 min.

Beispiel 1

3618 ml (2822 g) Cyclohexan wurden mit 0,97 ml THF und 837 ml (758,7 g) Styrol im Edelstahlreaktor vorgelegt und mit 1,4 molarer sec.-BuLi-Lösung bis zum Auftreten einer leichten Gelbfärbung austitriert. Sofort danach wurde mit 5,36 ml dergleichen BuLi-Lösung initiiert, wobei sich die Lösung intensiv gelb-orange verfärbte. Die Innentemperatur wurde durch Außenkühlung bei ca. 70-80°C gehalten. Nach Abklingen der Wärmetönung wurden 164 ml (109,3 g) Butadien zugegeben und 20 Minuten bei 80°C auspolymerisiert, bis keine Wärmeentwicklung mehr erfolgte und eine Probe zur GPC-Messung entnommen, die sofort mit Isopropanol desaktiviert wurde (Mp 143560 g/mol). Die lebende Lösung im Reaktor wurde auf 60°C abgekühlt.

In einem 2 Liter-Rundkolben aus Glas, ausgerüstet mit einem Blattrührer, Stickstoffanschluss und Stutzen für Monomer- und Initiatorzugabe wurden nach Inertisierung 1168 ml (911 g) Cyclohexan, 0,32 ml THF und 137 ml (124,5 g) Styrol vorgelegt, mit BuLi bis zum Auftreten einer schwachen Gelbfärbung austitriert und mit 6,32 ml BuLi initiiert. Der Rundkolben befand sich in einem Wasserbad, mit dem die Innentemperatur im Bereich von 60-70°C gehalten wurde.

Nach Abklingen der Wärmetönung und Kühlung auf 50°C wurde eine Probe für die GPC-Messung entnommen (Mp 12573), 15,12 ml BuLi und 286 ml (259,0 g) Styrol zugesetzt und gewartet, bis die Wärmetönung abgeklungen war. Die orangefarbene Lösung wurde auf 25°C gekühlt (GPC: Mp 20082 und 7313 g/mol) und unter Inertbedingungen in den Edelstahlreaktor mit der lebenden Lösung überführt. Anschließend wurden gleichzeitig 444 ml (290,6 g) Butadien und 56 ml (50,9 g) Styrol in den Reaktor zugegeben. Nach Abklingen der Wärmetönung und Probenahme (Mp 164671, 36941 und 23313 g/mol; Mn 49837 g/mol, Mw 109570) wurde durch Zugabe von 2,67 ml epoxidiertem Sojabohnenöl bei 80°C gekoppelt. Die Farbe veränderte sich hierbei von orange nach blassgelb. Nach weiteren 15 Minuten wurde. 2,5 ml Isopropanol hinzugefügt, die Lösung auf 30°C abgekühlt, in einen Kanister abgelassen, dort mit 8 ml Wasser und 16 g Trockeneis versetzt und kräftig geschüttelt, um die Lösung sauer zu stellen (multimodale Molmassenverteilung, Mn 79498 g/mol, Mw 172620). Anschließend wurde durch Zusatz von 3,2 g Sumilizer GS und 3,2 g Irganox 1010, die in Toluol gelöst waren, stabilisiert. Das Cyclohexan wurde anschließend in einem EX-Vakuumtrockenschrank entfernt. Es wurden 1,6 kg eines klaren, farblosen Harzes erhalten. Die Glasübergangstemperaturen lagen bei -72 und 63°C.

Beispiel 2

3618 ml (2822 g) Cyclohexan wurden mit 0,97 ml THF und 837 ml (758,7 g) Styrol im Edelstahlreaktor vorgelegt und mit 1,4 molarer sec.-BuLi-Lösung bis zum Auftreten einer leichten Gelbfärbung austitriert. Sofort danach wurde mit 5,36 ml dergleichen BuLi-Lösung initiiert, wobei sich die Lösung intensiv gelb-orange verfärbte. Die Innentemperatur wurde durch Außenkühlung bei ca. 70-80°C gehalten. Nach Abklingen der Wärmetönung wurden nach Probenahme für die GPC (Mp 111120 g/mol) 167 ml (109,6 g) Butadien zugegeben und 20 Minuten bei 80°C auspolymerisiert, bis keine Wärmeentwicklung mehr erfolgte und eine weitere GPC-Probe genommen (Mp 138130 g/mol). Die lebende Lösung im Reaktor wurde auf 60°C abgekühlt.

In einem 1 Liter-Rundkolben aus Glas, ausgerüstet mit einem Blattrührer, Stickstoffanschluss und Stutzen für Monomer- und Initiatorzugabe wurden nach Inertisierung 570 ml (445 g) Cyclohexan, 0,15 ml THF und 213 ml (193,0 g) Styrol vorgelegt, mit BuLi bis zum Auftreten einer schwachen Gelbfärbung austitriert und mit 6,32 ml BuLi initiiert. Der Rundkolben befand sich in einem Wasserbad, mit dem die Innentemperatur im Bereich von 60-70°C gehalten wurde. Nach Abklingen der Wärmetönung und Kühlung auf 25°C wurde eine Probe für die GPC-Messung entnommen (Mp 20893) und der Kolbeninhalt mit dem lebenden Polystyrol quantitativ unter Inertbedingungen in den Edelstahlreaktor mit der lebenden Lösung überführt.

Anschließend wurden 38 ml (24,6 g) Butadien in den Reaktor zugegeben und 15 Minuten bei 80°C polymerisiert (Mp 147892 und 27958 g/mol), danach die lebende Lösung auf 60°C abgekühlt.

In einem weiteren 1 Liter-Rundkolben wurden analog 598 ml (466 g) Cyclohexan, 0,17 ml THF und 220 ml (200,0 g) Styrol vorgelegt, mit BuLi titriert und mit 18,83 ml BuLi initiiert.

Nach Abklingen der Wärmetönung und Kühlung auf 25°C wurde eine Probe für die GPC-Messung entnommen (Mp 78217 g/mol) und der Kolbeninhalt mit dem lebenden Polystyrol quantitativ unter Inertbedingungen in den Edelstahlreaktor mit der lebenden Lösung überführt.Anschließend wurden gleichzeitig 406 ml (265,8 g) Butadien und 51 ml (46,6 g) Styrol in den Reaktor zugegeben. Nach Abklingen der Wärmetönung und Probenahme (Mp 161719, 44595 und 24326 g/mol; Mn 51766 g/mol, Mw 105440) wurde durch Zugabe von 2,67 ml epoxidiertem Sojabohnenöl bei 80°C gekoppelt.

Die Farbe veränderte sich hierbei von orange nach blassgelb. Nach weiteren 15 Minuten wurde 2,5 ml Isopropanol hinzugefügt, die Lösung auf 30°C abgekühlt, in einen Kanister abgelassen, dort mit 8 ml Wasser und 16 g Trockeneis versetzt und kräftig geschüttelt, um die Lösung sauer zu stellen (multimodale Molmassenverteilung, Mn 87974 g/mol, Mw 177540).

Anschließend wurde durch Zusatz von 3,2 g Sumilizer GS und 3,2 g Irganox 1010, die in Toluol gelöst waren, stabilisiert. Das Cyclohexan wurde anschließend in einem EX-Vakuumtrockenschrank entfernt.Es wurden 1,6 kg eines klaren, farblosen Harzes erhalten.

Die Glasübergangstemperaturen lagen bei -82 und 99°C.

Aus dem gewonnenen Copolymer lassen sich durch Mischen mit handelsüblichem Polystyrol nach bekannten Verfahren Folien und Formteile herstellen.

**Patentansprüche**

1. Verfahren zur Herstellung von unsymmetrisch aufgebauten, sternförmig verzweigten Blockcopolymeren, die, bezogen auf das verzweigte Blockcopolymere, 60 bis 95 Gew.-% Vinylaromat und 40 bis 5 Gew.-% eines konjugierten Diens mit 4 bis 5 C-Atomen einpolymerisiert enthalten, durch sequentielle anionische Polymerisation und nachfolgende Kopplung der gebildeten lebenden Blockcopolymer-Anionen mit einem Kopplungsmittel, **dadurch gekennzeichnet, dass**

    a1) in einem ersten Reaktor 30 bis 75 Gew.-% Vinylaromat, bezogen auf den Gesamtvinylaromat-Gehalt des hyperverzweigten Blockcopolymeren, in Gegenwart eines Initiators la auspolymerisiert wird, so dass Vinylaromatblock-Anionen Sa mit einer Molmasse Mw von 40000 bis 250000 g/mol resultieren;

a2) dann zu dem Vinylaromatblock-Anion Sa 5 bis 60 Gew.-% Dien, bezogen auf den Gesamtdiengehalt des verzweigten Blockcopolymeren, zugegeben und vollständig auspolymerisiert wird, so dass ein Blockcopolymer-Anion SaB1 mit einem Dienblock B1 resultiert;

b) separat in einem weiteren Reaktor 25 bis 70 Gew.-% Vinylaromat in Gegenwart eines Initiators Ib einfach oder mehrfach initiiert und auspolymerisiert wird, so dass ein oder mehrere Vinylaromatblock-Anionen Sb1 bis Sbn+1 mit einer Molmasse Mw von 5000 bis 50000 g/mol gebildet werden;

c) die in a2) und b) erhaltenen anionischen Blöcke SaB1 und Sb1 bis Sbn+1 in einem Reaktor vereinigt werden;

d) zu dieser Mischung die restliche Dienmenge, bezogen auf den Gesamtdiengehalt des verzweigten Blockcopolymeren, zugegeben und auspolymerisiert wird, so dass Blockcopolymer-Anionen SaB1B2 bzw. Sb1 B2 bis Sbn+1 B2 enthaltend Dienblöcke B2 resultieren; und

e) die erhaltenen Blockcopolymer-Anionen mit einem di- oder polyfunktionellen Kopplungsmittel zu einem verzweigten Blockcopolymer gekoppelt werden.

2.  Verfahren gemäß Anspruch 1, **dadurch gekennzeichnet, dass** vor dem Kopplungsschritt e) die Blockcopolymer-Anionen SaB1B2 bzw. Sb1B2 bis Sbn+1B2 mit Vinylaromat in einer Menge von 1 bis 10 Gew.-% der Gesamtvinylaromat-Menge des verzweigten Blockcopolymeren, umgesetzt werden, wobei der jeweils erhaltene Vinylaromat-Block S eine Molmasse Mw von 1000 bis 10000 g/mol aufweist.

3.  Verfahren gemäß Anspruch 1 oder 2, **dadurch gekennzeichnet, dass** in Schritt a2) das Dien gemeinsam mit einem Vinylaromat zugegeben wird, wobei die Vinylaromatmenge 1 bis 15 Gew.%, bezogen auf die Gesamtvinylaromat-Menge, beträgt, so dass der erhaltene Dienblock B1 einen oder mehrere Vinylaromat-Blöcke mit einer Molmasse Mw von 500 bis 8000 g/mol enthalten kann.

4.  Verfahren gemäß einem der Ansprüche 1 bis 3, **dadurch gekennzeichnet, dass** in Schritt d) das Dien gemeinsam mit einem Vinylaromat zugegeben wird, wobei die Vinylaromat-Menge 1 bis 15 Gew.%, bezogen auf die Gesamtvinylaromat-Menge, beträgt, so dass der erhaltene Dienblock B2 einen oder mehrere Vinylaromat-Blöcke mit einer Molmasse Mw von 500 bis 8000 g/mol enthalten kann.

5.  Verfahren gemäß einem der Ansprüche 1 bis 4, **dadurch gekennzeichnet, dass** als Vinylaromat Styrol und als Dien 1,3-Butadien eingesetzt wird.

6.  Sternförmig verzweigte Blockcopolymerisate hergestellt nach einem der Ansprüche 1 bis 5.

7.  Verwendung der Blockcopolymerisate, hergestellt nach einem der Ansprüche 1 bis 5, zur Herstellung von Formteilen und Tiefziehfolien.

8.  Thermoplastische Mischung enthaltend mindestens ein Blockcopolymerisat, hergestellt nach einem der Ansprüche 1 bis 5, und mindestens eine thermoplastische Komponente.

9.  Thermoplastische Mischung enthaltend mindestens ein sternförmig verzweigte Blockcopolymerisat, hergestellt nach einem der Ansprüche 1 bis 5, und Polystyrol.

10. Verfahren zur Herstellung einer thermoplastische Mischung enthaltend mindestens ein sternförmig verzweigtes Blockcopolymerisat, hergestellt nach einem der Ansprüche 1 bis 5, und eine weitere thermoplastische Komponente, insbesondere Polystyrol, durch Vermischen der Komponenten.

**Claims**

1.  A process for the production of asymmetric, star-branched block copolymers which comprise, incorporated into the polymer, from 60 to 95% by weight of vinylaromatic and from 40 to 5% by weight of a conjugated diene having from 4 to 5 C atoms, based on the branched block copolymer, via sequential anionic polymerization and subsequent coupling of the resultant living block-copolymer anions by a coupling agent, **characterized in that**

a1) in a first reactor, from 30 to 75% by weight of vinylaromatic, based on the entire vinylaromatic content of the hyperbranched block copolymer, are polymerized to completion in the presence of an initiator Ia to give vinylaromatic-block anions Sa with molar mass Mw from 40 000 to 250 000 g/mol;

a2) from 5 to 60% by weight of diene, based on the entire diene content of the branched block copolymer, are then added to the vinylaromatic-block anion Sa and polymerized to completion to give a block-copolymer anion SaB1 having a diene block B1;

b) separately in another reactor, in the presence of an initiator Ib, from 25 to 70% by weight of vinylaromatic are subjected to single or multiple initiation and are polymerized to completion to form one or more vinylaromatic-block anions Sb1 to Sbn+1 with molar mass Mw from 5000 to 50 000 g/mol;

c) the anionic blocks SaB1 and Sb1 to Sbn+1 obtained in a2) and b) are combined in a reactor;

d) the remaining quantity of diene, based on the entire diene content of the branched block copolymer, is added to this mixture and polymerized to completion to give block-copolymer anions SaB1 B2 and, respectively, Sb1 B2 to Sbn+1 B2 comprising diene blocks B2; and

e) the resultant block-copolymer anions are coupled by a di- or polyfunctional coupling agent to give a branched block copolymer.

2. The process as claimed in claim 1, **characterized in that**, before the coupling step e), the block-copolymer anions SaB1 B2 and, respectively, Sb1 B2 to Sbn+1B2 are reacted with vinylaromatic in a quantity of from 1 to 10% by weight of the entire vinylaromatic quantity of the branched block copolymer, where the molar mass Mw of the respective vinylaromatic block S obtained is from 1000 to 10 000 g/mol.

3. The process as claimed in claim 1 or 2, **characterized in that** in step a2) the diene is added together with a vinylaromatic, where the quantity of vinylaromatic is from 1 to 15% by weight, based on the entire quantity of vinylaromatic, so that the resultant diene block B1 can comprise one or more vinylaromatic blocks with molar mass Mw from 500 to 8000 g/mol.

4. The process as claimed in any of claims 1 to 3, **characterized in that** in step d) the diene is added together with a vinylaromatic, where the quantity of vinylaromatic is from 1 to 15% by weight, based on the entire quantity of vinylaromatic, so that the resultant diene block B2 can comprise one or more vinylaromatic blocks with molar mass Mw from 500 to 8000 g/mol.

5. The process as claimed in any one of claims 1 to 4, **characterized in that** styrene is used as vinylaromatic and 1,3-butadiene is used as diene.

6. A star-branched block copolymer produced as claimed in any of claims 1 to 5.

7. The use of the block copolymers produced according to any of claims 1 to 5 for the production of moldings and of thermoforming foils.

8. A thermoplastic mixture comprising at least one block copolymer produced as claimed in any of claims 1 to 5 and at least one thermoplastic component.

9. A thermoplastic mixture comprising at least one star-branched block copolymer produced as claimed in any of claims 1 to 5 and polystyrene.

10. A process for the production of a thermoplastic mixture comprising at least one star-branched block copolymer produced as claimed in any of claims 1 to 5 and another thermoplastic component, in particular polystyrene, via mixing of the components.

**Revendications**

1. Procédé de préparation de copolymères à blocs ramifiés en étoile, à structure asymétrique, qui, par rapport au copolymère ramifié, contiennent polymérisés 60 à 95 % en poids d'un composé vinylaromatique et 40 à 5 % en poids d'un diène conjugué ayant 4 à 5 atomes de carbone, par polymérisation anionique séquentielle, puis couplage des anions du copolymère à blocs vivant formé avec un agent de couplage, **caractérisé en ce que**

a1) dans un premier réacteur, on procède à la polymérisation complète de 30 à 75 % en poids d'un composé vinylaromatique, par rapport à la teneur totale en composé vinylaromatique du copolymère à blocs hyper-ramifié, en présence d'un amorceur, de façon qu'il en résulte des anions des blocs vinylaromatiques Sa ayant une masse moléculaire Mw de 40 000 à 250 000 g/mol ;

a2) ensuite, on ajoute à l'anion des blocs vinylaromatiques Sa 5 à 60 % en poids d'un diène, par rapport à la teneur totale en diènes du copolymère à blocs ramifié, et on le soumet à une polymérisation complète de façon à obtenir un anion du copolymère à blocs SaB1 comportant un bloc diène B1 ;

b) séparément, dans un autre réacteur, on procède à l'amorçage en une ou plusieurs fois et à la polymérisation complète de 25 à 70 % en poids d'un composé vinylaromatique en présence d'un amorceur, de façon qu'il se forme un ou plusieurs anions des blocs vinylaromatiques Sb1 à Sbn+1, ayant ne masse moléculaire Mw de 5000 à 50 000 g/mol ;

c) on combine dans un réacteur les blocs anioniques SaB1 et Sb1 à Sbn+1 obtenus en a2) et b) ;

d) on ajoute à ce mélange la quantité restante de diène, par rapport à la teneur totale en diènes du copolymère à blocs ramifié, et on la soumet à une polymérisation complète, de façon à obtenir les anions du copolymère à blocs respectivement SaB1B2 et Sb1B2 à Sbn+1B2, contenant les blocs diènes B2 ; et

e) on couple les anions du copolymère à blocs obtenus avec un agent de couplage di- ou polyfonctionnel, pour obtenir un copolymère à blocs ramifié.

2. Procédé selon la revendication 1, **caractérisé en ce que**, avant l'étape de couplage e), les anions SaB1B2 et Sb1B2 à Sbn+1B2 du copolymère à blocs sont mis à réagir avec un composé vinylaromatique en une quantité de 1 à 10 % en poids par rapport à la quantité totale du composé vinylaromatique du copolymère à blocs ramifié, le bloc vinylaromatique S obtenu dans chaque cas présentant une masse moléculaire de 1000 à 10 000 g/mol.

3. Procédé selon la revendication 1 ou 2, **caractérisé en ce que**, dans l'étape a2), le diène est ajouté en même temps qu'un composé vinylaromatique, la quantité du composé vinylaromatique étant de 1 à 15 % en poids par rapport à la quantité totale du composé vinylaromatique, de façon que le bloc diène B1 obtenu puisse contenir un ou plusieurs blocs vinylaromatiques ayant une masse moléculaire Mw de 500 à 8000 g/mol.

4. Procédé selon l'une des revendications 1 3, **caractérisé en ce que**, dans l'étape d), le diène est ajouté en même temps qu'un composé vinylaromatique, la quantité du composé vinylaromatique étant de 1 à 15 % en poids par rapport à la quantité totale du composé vinylaromatique, de façon que le bloc diène B2 obtenu puisse contenir un ou plusieurs blocs vinylaromatiques ayant une masse moléculaire Mw de 500 à 8000 g/mol.

5. Procédé selon l'une des revendications 1 à 4, **caractérisé en ce qu'**on utilise du styrène en tant que composé vinylaromatique et du 1,3-butadiène en tant que diène.

6. Copolymères à blocs ramifiés en étoile, préparés selon l'une des revendications 1 à 5.

7. Utilisation des copolymères à blocs préparés selon l'une des revendications 1 à 5 pour fabriquer des objets moulés et des feuilles à emboutir.

8. Mélange thermoplastique contenant au moins un copolymère à blocs préparé selon l'une des revendications 1 à 5, et au moins un composant thermoplastique.

9. Mélange thermoplastique contenant au moins un copolymère à blocs ramifié en étoile, préparé selon l'une des revendications 1 à 5, et du polystyrène.

10. Procédé de fabrication d'un mélange thermoplastique contenant au moins un copolymère à blocs ramifié en étoile, préparé selon l'une des revendications 1 à 5, et un autre composant thermoplastique, notamment du polystyrène, par mélange des composants.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3639517 A
- US 4091053 A
- EP 0316671 A
- EP 0316671 A2

**In der Beschreibung aufgeführte Nicht-Patentliteratur**

- Polystyrol. Kunststoffhandbuch. Hanser Verlag, 1996, vol. 4